# EUROPEAN PATENT APPLICATION

(11) **EP 4 656 892 A1**
(43) Date of publication of application: **03.12.2025**
(21) Application number: 24305860.9
(22) Date of filing: 31.05.2024
(51) Int. Cl.: F16C 19/06, F16C 33/66, F16C 33/80, H02K 5/173

(54) **ELECTRIC MACHINE WITH AN IMPROVED ROLLER BEARING LUBRICATION AND ASSOCIATED VEHICLE**

(71) Applicant: ALSTOM Holdings, 93400 Saint-Ouen-sur-Seine (FR)
(72) Inventor: ROBBE, Gilles, 25660 MONTFAUCON (FR); RACLOT, Jean-Philippe, 25000 BESANCON (FR); KEMPF, Antoine, 25110 PONT-LES-MOULINS (FR)
(74) Representative: Plasseraud IP

(57) **Abstract**

The invention concerns an electric machine (10) comprising:
- a body,
- a shaft (16) extending along a central axis (A-A),
- a roller bearing (20) arranged between the shaft (16) and the body,
- a first grease chamber (22) that is annular and delimited axially on a first side face (44) of the roller bearing (20), and
- a grease injection circuit (24) for the injection of grease in the first grease chamber (22), the grease injection circuit (24) comprising an injection channel (60A) and a grease distribution ring (60B) connected to the injection channel (60A) and in fluid communication with the first grease chamber (22) via a slot (62), the grease distribution ring (60B) and the slot (62) both extending circumferentially, the slot (62) being axially narrower than the grease distribution ring (60B).

## Description

The present invention relates to the technical field of electric machines, and more precisely to a grease injection circuit of an electric machine.

An electric machine generally comprises a stator housed in a body such as casing, and a rotor fixed to a shaft mounted rotatable relative to the body via at least one roller bearing.

In order to ensure the proper functioning of the roller bearing, it is necessary to inject grease into the roller bearing in order to lubricate the rollers of the roller bearing.

For this purpose, it is possible to define a first grease chamber and a second grease chamber on either side of the roller bearing. Grease is injected in the first grease chamber via an injection channel defined in the body and flow by gravity into the second chamber with passing through the roller bearing, in particular between the rollers.

However, such lubrication is not entirely satisfactory, as the grease is sometimes only distributed over a fraction of the circumference of the bearing.

One of the aims of the invention is to propose an electric machine with an improved roller bearing lubrication.

To this end, the invention proposes an electric machine, in particular for a vehicle, comprising:
- a body supporting a stator,
- a shaft extending along a central axis and supporting a rotor,
- a roller bearing arranged between the shaft and the body for mounting the shaft rotatable relative to the body about the central axis,
- a first grease chamber that is annular and delimited axially on a first side face of the roller bearing, and
- a grease injection circuit for the injection of grease in the first grease chamber, the grease injection circuit comprising an injection channel and a grease distribution ring connected to the injection channel and in fluid communication with the first grease chamber via a slot, the grease distribution ring and the slot both extending circumferentially, the slot being axially narrower than the grease distribution ring..

In some examples, the electric machine comprises one or several of the following features, taken individually or according to any technically feasible combination:
- The axial dimension of the slot is at least three times smaller than the axial dimension of the grease distribution ring.
- The axial dimension of the slot is smaller than 1 mm.
- The electric machine comprises a first sealing assembly delimiting the first grease chamber and comprising a first static sealing element fixed to the body and cooperating with a first movable sealing element fixed to the shaft for sealing the first grease chamber.
- The first static sealing element and the first movable sealing element define a labyrinth seal.
- The grease distribution ring is defined axially between the first static sealing element and the first side face of the roller bearing, which is preferably located on an outer ring of the roller bearing.
- The first static sealing element comprises a main part and a projection projecting axially from the main part and towards the first side surface of the roller bearing, the slot being axially defined between said projection of the first static sealing element and the first side face of the roller bearing.
- The injection channel is in fluid communication with an injection port and an injection duct fluidly connecting the injection port to the injection channel.
- The injection duct extends in the body and/or in the first sealing assembly.
- The electric machine comprises a second grease chamber that is annular and delimited axially on a second side face of the roller bearing opposed to the first side face of the roller bearing.
- The second grease chamber is in fluid communication with an outlet port for allowing the grease to evacuate from the second grease chamber to the outside.
- The electric machine comprises a second sealing assembly, the second grease chamber being defined axially between said second sealing assembly and the second side face of the roller bearing.
- The second sealing assembly comprises a second static sealing element fixed to the body cooperating with a second movable sealing element fixed to the shaft to seal the second grease chamber.
- The body comprises a side wall and two flanges defining an inner compartment delimited radially by the side wall and axially between the two flanges, the roller bearing being arranged between one of the flanges and the shaft.

The invention also concerns a vehicle, in particular a railway vehicle, comprising an electric machine as disclosed above.

The invention and its advantages will be better understood upon reading the following description, which is given solely by way of non-limiting example and with reference to the appendix drawings, in which:
Figure 1 is a schematic longitudinal section view of an electric machine according to the invention;
Figure 2 is a detail view of one of the roller bearing of the electric machine of Figure 1; and
Figure 3 is a schematic perspective view of a first static sealing element of the electric machine of Figure 1.

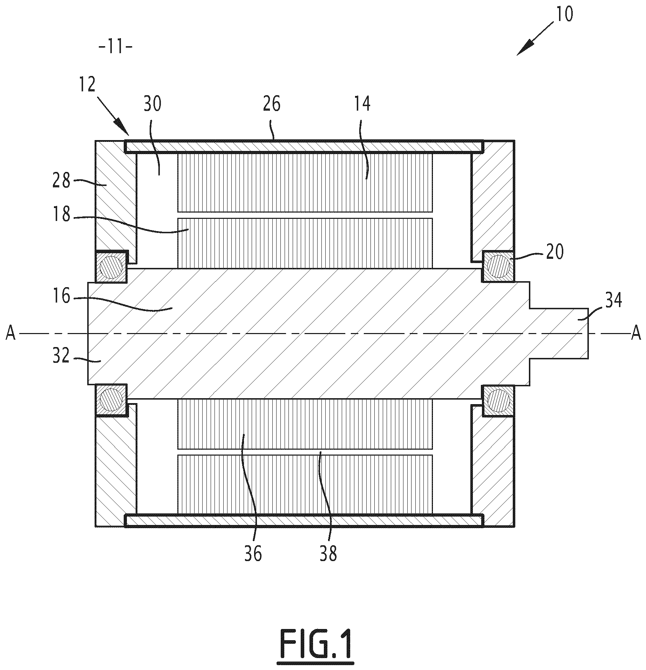

In reference to Figure 1, an electric machine 10 is included in a railway or automotive vehicle 11. The electric machine 10 is, for example, a synchronous motor, an asynchronous motor, a DC motor, or an electric generator. In a preferred embodiment, the electric machine 10 is an asynchronous motor. In particular, the electric machine 10 is a traction motor. A traction motor is provided for the propulsion of the vehicle 11, i.e. for driving wheels of the vehicle 11.

The electric machine 10 comprises a body 12 supporting a stator 14 and a shaft 16 extending along a central axis A-A and supporting a rotor 18, the shaft 16 being mounted rotatable relative to the body 12 via at least one roller bearing 20.

The body 12 is for example a casing. The stator 14 and the rotor 18 are encased in the body 12.

As shown on Figure 1, the body 12 comprises for example a side wall 26 extending circumferentially around the central axis A-A and two flanges 28 defining an inner compartment 30 delimited radially by the side wall 26 and axially between the two flanges 28.

The stator 14 is preferably arranged inside the inner compartment 30.

In particular, the stator 14 is fixedly mounted on the body 12 and surrounds the rotor 18, which is mounted on the shaft 16.

In some examples, the stator 14 comprises a magnetic circuit carrying a set of stator windings (not shown). Each stator winding is capable of producing a magnetic field when an electric current is passed through it.

The shaft 16 extends along the central axis A-A between a first end 32 and a second end 34.

The first end 32 and/or the second end 34 is situated outside of the inner compartment 30 defined by the body 12.

The shaft 16 supports the rotor 18, in particular inside the inner compartment 30 defined by the body 12.

The rotor 18 comprises for example a magnetic circuit 36 fixedly mounted on the shaft 16. The magnetic circuit 36 takes for example the form of a tubular sleeve fitted over the shaft 16. The magnetic circuit 36 has two substantially radial end faces and a side face facing the stator 14, which defines an air gap 38 with the stator 14, more particularly with the magnetic circuit of the stator 14.

The magnetic circuit 36 of the rotor 18 is for example formed by a stack of first disks made of an electrically conducting material, e.g. a metal, alternating with disks made of an electrically insulating material.

The magnetic circuit 36 carries for example permanent magnets (not shown). Alternatively, magnetic circuit 36 carries a rotor winding assembly (not shown) suitable for generating a magnetic field from an electric current.

The shaft 16 is mounted rotatable relative to the body 12 via at least one roller bearing 20. Each roller bearing 20 is arranged between the shaft 16 and the body 12, in particular between the shaft 16 and one of the flanges 28 of the body 12.

More preferably, the shaft 16 is mounted rotatable relative to the body 12 via two roller bearings 20, each roller bearing 20 being in particular arranged between the shaft 16 and a respective corresponding flange 28 of the body 12.

Each roller bearing 20 is centered on the central axis A-A.

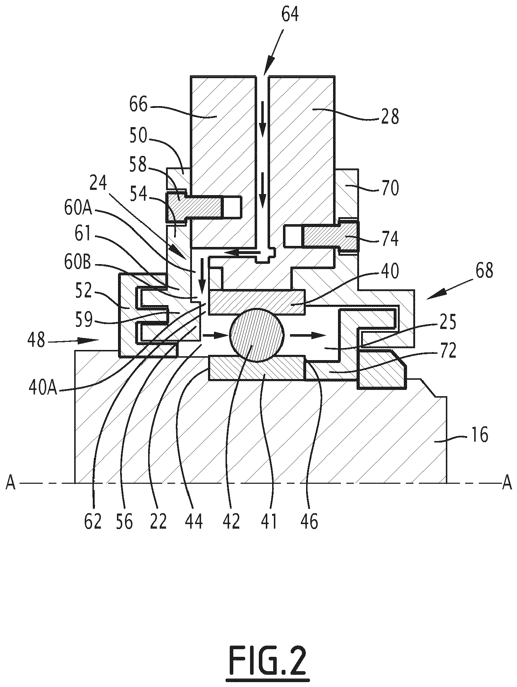

As visible on Figure 2, each roller bearing 20 comprises an outer ring 40 and an inner ring 41 and a plurality of rolling elements 42, such as balls, disposed between the outer ring 40 and the inner ring 41. The outer ring 40 and the inner ring 41 are concentric and centered on the central axis A-A.

One of the outer ring 40 and the inner ring 41 is attached to the body 12 and the other to the shaft 16. As illustrated on Figure 2, in some examples, the outer ring 40 is attached to the body 12 and the inner ring 41 is attached to the shaft 16.

Each roller bearing 20 defines a first side face 44 and a second side face 46 opposed to the first side face 44 along the central axis A-A.

For example in the embodiment illustrated on Figures 1 and 2, the first side face 44 is the inner side face of the roller bearing 20, i.e. the side face of the roller bearing 20 facing the inner compartment 30. The second side face 46 is the outer side face of the roller bearing 20, i.e. the side face of the roller bearing 20 facing opposite the inner compartment 30.

As shown on Figure 2, the electric machine 10 comprises, for the lubrication of each roller bearing 20, a first grease chamber 22, a grease injection circuit 24 and advantageously a second grease chamber 25.

The first grease chamber 22 is annular and centered on the central axis A-A.

The first grease chamber 22 is delimited radially between the outer ring 40 and the inner ring 41 of the roller bearing 20.

The first grease chamber 22 is located axially on the side of first side face 44 of the roller bearing 20.

In a preferred embodiment illustrated on Figure 2, the first grease chamber 22 is delimited axially between the first side face 44 of the roller bearing 20 and a first sealing assembly 48.

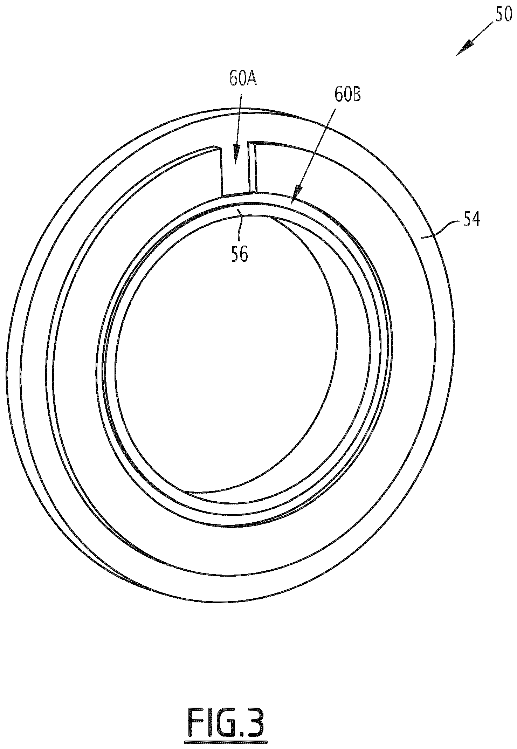

The first sealing assembly 48 comprises preferably a first static sealing element 50 (represented on Figure 3) fixed to the body 12 and cooperating with a first movable sealing element 52 fixed to the shaft 16 for sealing the first grease chamber 22.

In particular, the first static sealing element 50 comprises a main part 54 and a projection 56 projecting axially from the main part 54 and towards the first side face 44 of the roller bearing 20.

The main part 54 of the first static sealing element 50 is for example fixed to the body 12, and in particular to the corresponding flange 28, by a mechanical fixation 58, such as a screw.

As shown on Figure 2, the projection 56 projects axially from the main part 54 preferably only from a first section 59 of the portion of the main part 54 facing the roller bearing 20.

Advantageously, the first static sealing element 50 and the first movable sealing element 52 define a labyrinth seal.

More precisely, each one of the first static sealing element 50 and the first movable sealing element 52 comprises a series of alternating teeth and grooves intermeshed with one another.

The grease injection circuit 24 is configured for the injection of grease in the first grease chamber 22.

The grease injection circuit 24 comprises an injection channel 60A and a grease distribution ring 60B connected to the injection channel 60A.

Preferably, the injection channel 60A does not extend circumferentially.

More particularly, as visible on Figure 3, the injection channel 60A is defined in one portion of the main part 54 of the first static sealing element 50.

For example, the injection channel 60A extends around the central axis A-A over 10 degrees.

The grease distribution ring 60B extends circumferentially around the central axis A-A and is in fluid communication with the first grease chamber 22 via a slot 62 extending circumferentially around the central axis A-A alongside the grease distribution ring 60B.

Preferably, the grease distribution ring 60B extends circumferentially around the central axis A-A over 360 degrees.

The slot 62 extends circumferentially around the central axis A-A over 360 degrees.

The slot 62 extends for example circumferentially around the central axis A-A over the same extend as the grease distribution ring 60B.

The grease distribution ring 60B is for example defined axially between the first static sealing element 50 and the first side face 44 of the roller bearing 20, preferably a first side surface 40A of the outer ring 40 located on the first side surface of the roller bearing 20.

The grease distribution ring 60B is for example delimited axially between a part of the first side surface 40A of the outer ring 40 of the roller bearing 20 and a second section 61 of the portion of the main part 54 facing the roller bearing 20, i.e. the section of the portion of the main part 54 facing the roller bearing 20 without the projection 56.

The slot 62 is axially narrower than the grease distribution ring 60B.

Advantageously, the axial dimension of the slot 62 is at least three times smaller than the axial dimension of the grease distribution ring 60B.

In particular, the axial dimension of the slot 62 is smaller than 1 mm.

As shown of Figure 2, the slot 62 is for example axially defined between the projection 56 of the first static sealing element 50 and the first side face 44 of the roller bearing 20, in particular the first side surface 40A of the outer ring 40 of the roller bearing 20.

In this particular embodiment illustrated on Figure 2, the axial dimension of the slot 62 corresponds to the distance between a surface of the projection 56 facing the first side surface 40A of the outer ring 40 and the first side surface 40A of the outer ring 40. The difference between the axial dimension of the slot 62 and the axial dimension of the grease distribution ring 60B thus corresponds to the axial dimension of the projection 56.

Advantageously, the grease injection circuit 24, and in particular the injection channel 60A, is in fluid communication with an injection port 64 and an injection duct 66 fluidly connecting the injection port 64 to the injection channel 60A.

In the example embodiment illustrated on Figure 2, the injection duct 66 extends in the body 12, more precisely in the corresponding flange 28, on which the roller bearing 20 is mounted, and in the first sealing assembly 48, as shown on Figure 2.

In a variant (not shown), the injection duct 66 extends only in the body 12 or only in the first sealing assembly 48.

The second grease chamber 25 is preferably annular and centered on the central axis A-A.

The second grease chamber 25 is preferably delimited radially at least partially between the outer ring 40 and the inner ring 41 of the roller bearing 20.

The second grease chamber 25 is delimited axially by the second side face 46 of the roller bearing 20.

In some examples, as illustrated on Figure 2, the second grease chamber 25 is delimited axially between the second side face 46 of the roller bearing 20 and a second sealing assembly 68.

The second sealing assembly 68 comprises preferably a second static sealing element 70 fixed to the body 12 and cooperating with a second movable sealing element 72 fixed to the shaft 16 for sealing the second grease chamber 25.

The second static sealing element 70 is for example fixed to the body 12, and in particular to the corresponding flange 28, by a mechanical fixation 74, such as a screw.

Advantageously, the second static sealing element 70 and the second movable sealing element 72 define a labyrinth seal.

Preferably, the second grease chamber 25 is in fluid communication with an outlet port (not shown) for allowing the grease to evacuate from the second grease chamber 25 to the outside.

A lubrication process of the roller bearing 20 will now be described, in reference to the arrows illustrated on Figure 2.

Grease is first injected through the injection port 64, and then flows, advantageously by gravity, inside the injection duct 66.

The grease flows then inside the injection channel 60A and passes inside the first grease chamber 22 via the grease distribution ring 60B and the slot 62.

As the slot 62 is narrower than the grease distribution ring 60B, the grease tends to distributed over a large circumference in the grease distribution ring 60B before passing in the first grease chamber 22 via the slot 62. This ensures that the grease is fed to the first grease chamber 22 over a large circumference of the first grease chamber 22, and preferably over the total circumference of the first grease chamber 22.

Once the grease is in the first chamber 22, the grease flows through the roller bearing 20 with passing between the rolling elements 42 of the roller bearing 20.

The grease then reaches the second grease chamber 25 and is evacuated by the outlet port (not shown).

Thanks to the provision of the slot 62 narrower than the grease distribution ring 60B, the grease is distributed over a large circumference of the first grease chamber 22, and not only a small portion of the circumference of the first grease chamber 22.

Such a distribution allows a lubrication of a larger part of the roller bearing 20, and thus greatly improve the lubrication of the roller bearing 20.

Moreover, such a grease injection circuit 24 requires no additional components and is easy to install, while remaining economical.

Furthermore, such a grease injection circuit 24 can easily be implemented to existing electric machine 10.

## Claims

1. An electric machine (10), in particular for a vehicle, comprising:
- a body (12) supporting a stator (14),
- a shaft (16) extending along a central axis (A-A) and supporting a rotor (18),
- a roller bearing (20) arranged between the shaft (16) and the body (12) for mounting the shaft (16) rotatable relative to the body (12) about the central axis (A-A),
- a first grease chamber (22) that is annular and delimited axially on a first side face (44) of the roller bearing (20), and
- a grease injection circuit (24) for the injection of grease in the first grease chamber (22), the grease injection circuit (24) comprising an injection channel (60A) and a grease distribution ring (60B) connected to the injection channel (60A) and in fluid communication with the first grease chamber (22) via a slot (62), the grease distribution ring (60B) and the slot (62) both extending circumferentially, the slot (62) being axially narrower than the grease distribution ring (60B).

2. The electric machine (10) according to claim 1, wherein the axial dimension of the slot (62) is at least three times smaller than the axial dimension of the grease distribution ring (60B).

3. The electric machine (10) according to claim 1 or 2, wherein the axial dimension of the slot (62) is smaller than 1 mm.

4. The electric machine (10) according to any one of claims 1 to 3, comprising a first sealing assembly (48) delimiting the first grease chamber (22) and comprising a first static sealing element (50) fixed to the body (12) and cooperating with a first movable sealing element (52) fixed to the shaft (16) for sealing the first grease chamber (22).

5. The electric machine (10) according to claim 4, wherein the first static sealing element (50) and the first movable sealing element (52) define a labyrinth seal.

6. The electric machine (10) according to claim 4 or 5, wherein the grease distribution ring (60B) is defined axially between the first static sealing element (50) and the first side face (44) of the roller bearing (20), which is preferably located on an outer ring (40) of the roller bearing (20).

7. The electric machine (10) according to claim 6, wherein the first static sealing element (50) comprises a main part (54) and a projection (56) projecting axially from the main part (54) and towards the first side surface of the roller bearing (20), the slot (62) being axially defined between said projection (56) of the first static sealing element (50) and the first side face (44) of the roller bearing (20).

8. The electric machine (10) according to any one of claims 1 to 7, wherein the injection channel (60A) is in fluid communication with an injection port (64) and an injection duct (66) fluidly connecting the injection port (64) to the injection channel (60A).

9. The electric machine (10) according to the combination of claim 8 and one of claims 4 to 7, wherein the injection duct (66) extends in the body (12) and/or in the first sealing assembly (48).

10. The electric machine (10) according to any one of claims 1 to 8, comprising a second grease chamber (25) that is annular and delimited axially on a second side face (46) of the roller bearing (20) opposed to the first side face (44) of the roller bearing (20).

11. The electric machine (10) according to claim 10, wherein the second grease chamber (25) is in fluid communication with an outlet port for allowing the grease to evacuate from the second grease chamber (25) to the outside.

12. The electric machine (10) according to claim 10 or 11 comprising a second sealing assembly (68), the second grease chamber (25) being defined axially between said second sealing assembly (68) and the second side face (46) of the roller bearing (20).

13. The electric machine (10) according to claim 12, wherein the second sealing assembly (68) comprises a second static sealing element (70) fixed to the body (12) cooperating with a second movable sealing element (72) fixed to the shaft (16) to seal the second grease chamber (25).

14. The electric machine (10) according to any one of claims 1 to 13, wherein the body (12) comprises a side wall (26) and two flanges (28) defining an inner compartment (30) delimited radially by the side wall (26) and axially between the two flanges (28), the roller bearing (20) being arranged between one of the flanges (28) and the shaft (16).

15. A vehicle (11), in particular a railway vehicle, comprising an electric machine (10), in particular a motor, more in particular a traction motor for propulsion of the vehicle, according to any one of claims 1 to 14.
